# EUROPEAN PATENT SPECIFICATION

(11) **EP 3 122 468 B1**
(45) Date of publication and mention of the grant of the patent: **22.06.2022**
(21) Application number: 15769894.5
(22) Date of filing: 28.03.2015
(51) Int. Cl.: B05B 1/32, F02M 43/04, F02M 61/04, F02M 61/10, F02M 21/02, F02M 61/08, F02M 61/12, F02M 45/12, F02M 47/02, F02M 61/18, F02M 45/08

(54) **A FUEL INJECTOR FLEXIBLE FOR SINGLE AND DUAL FUEL INJECTION**
FLEXIBLER KRAFTSTOFFINJEKTOR FÜR EINZEL- UND ZWEIFACHEINSPRITZUNG
INJECTEUR DE CARBURANT SOUPLE POUR INJECTION DE CARBURANT SIMPLE ET DOUBLE

(30) Priority: 28.03.2014 US 201461972207 P
(43) Date of publication of application: 01.02.2017
(73) Proprietor: Hou, Deyang, Sugar Land, TX 77496-9056 (US); QuantLogic Corporation, Sugar Land, TX 77496-9056 (US)
(72) Inventor: HOU, Deyang, Sugar Land, TX 77496-9056 (US)
(74) Representative: Sharman, Thomas Alexander
(86) International application number: PCT/US2015/023205
(87) International publication number: WO 2015/149039

(56) References cited:
- WO-A1-02/18775
- DE-A1-102004 021 538
- GB-A- 1 183 156
- JP-A- 2004 204 795
- US-A- 4 266 727
- US-A- 4 836 453
- US-A- 5 884 611
- US-A- 5 884 611
- US-A1- 2010 199 948
- US-A1- 2013 199 501
- US-A1- 2013 213 358
- US-A1- 2013 213 358
- US-A1- 2014 034 023

## Description

### TECHNICAL FIELDS

This invention is related to a fuel injector and an internal combustion engine. More specifically, this invention disclosed a fuel injector which can independently or collectively inject two types of fuels differentiated by at least one parameter of pressure, molecular structure or thermodynamic phases, and an engine using at least one such fuel injector, which can be a spark-ignition engine or a compression-ignition engine.

### BACKGROUND OF THE INVENTION

This application claims the priority of US Provisional Application 61972207, filed on March 28, 2014.

Description of the Related Art - The combustion process in a conventional direct injection Diesel engine is characterized by diffusion combustion with a fixed-spray-angle multi-hole fuel injector. Due to its intrinsic non-homogeneous characteristics of fuel-air mixture formation, it is often contradictory to simultaneously reduce soot and NOx formation in a conventional diesel engine. Over last two decades, significant progress has been made for Diesel engine combustion. Progress has been made in recent years for advanced combustion modes, such as Homogeneous-Charge Compression-Ignition (HCCI) combustion, reactivity controlled compression ignition (RCCI) and Premixed Charge Compression Ignition (PCCI). However, many issues remain to be solved to control the ignition timing, the duration of combustion, the rate of combustion for various load and speed conditions. It is desirable to have a fuel injector which can directly inject two fuels differentiated by at least one parameter of injection pressure, molecular structure, and thermodynamics phases. Further, it is desirable to inject two types of fuels at different spray angles tailored for different injection timings at different engine load and speed conditions.

US 2010/199948 A1 discloses a fuel injector for injecting gaseous and liquid fuel into an engine. In an embodiment, the fuel injector comprises a liquid needle and main needle contained in an injector body. When the liquid needle is lifted, high pressure fuel may mix with a gas in a lower chamber. When the main needle is lifted, the gas a liquid mixture may be injected into a combustion chamber of an engine.

WO 2002/18775 A1 discloses a duel fuel injector having a first and a second valve member contained within a body. The first valve member comprises a bore and opens in the direction in which fuel in injected. The second valve member is a needle member which is slidably retained within the bore within the first valve member so as to seat on a diameter outside of the orifices thereby controlling the flow of fuel. The second valve member is opened by lifting the second valve member away from orifices in the first valve member.

However, even though many inventions have been disclosed for dual fuel injectors and injectors with variable orifices, issues related to manufacture complexity and fuel leaking have prevented many inventions from being mass production viable. These issues are especially true for common rail injectors with compact nozzles, where arrangement of complex fuel passages becomes a challenging task. Furthermore, few of previous disclosed arts can offer the injection capability of selectively and collectively direct inject different fuels without interfering with each other between the operations of injecting different fuels. Thus, previous arts demands significant control complexity, especially for synchronizing the dual needle operations normally used for dual fuel injections.

### SUMMARY OF THE INVENTION

It is our goals of this invention to at least solve some of the major issues facing previous arts. More specifically, this invention offers co-axial needle valve designs which can operate both selectively and collectively to give the freedom to inject either a single fuel, either fuel of two supplied fuels, or a combination of two supplied fuels, on demand based on engine operation conditions and the need for optimizing combustion. This work can be considered as an extension of our previous work disclosed in PCT/US11/56002.

The invention disclosed a fuel injector which has the capability to quickly switch fuel spray pattern with different spray angles in a same engine power cycle, and is capable of injecting two different fuels in the same engine power cycle with multiple injections.

### BRIEF DESCRIPTION OF THE DRAWINGS

**FIG 1** is a fragmentary sectional view of a first exemplary embodiment of an injector of the invention with only key components marked;
**FIG 2** is same as FIG 1 except there are only a set of fuel injection outlets on nozzle body;
**FIG 3** is the same as FIG 1 except with detailed notations for key components, key fuel passages, key surfaces, and key pressure control chambers marked.
**FIG 4** is another fragmentary sectional view of a second exemplary embodiment of an injector of the invention with only key components marked;
**FIG 5** is the same as **FIG 4** except with detailed notations for key components, key fuel passages, key surfaces, and key pressure control chambers marked.

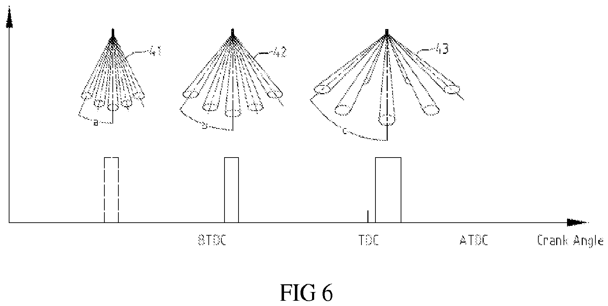

**FIG 6** is an illustration of the injection spray patterns along with injection timings for an internal combustion engine using the fuel injector as in **FIG 1** and **FIG 3**;

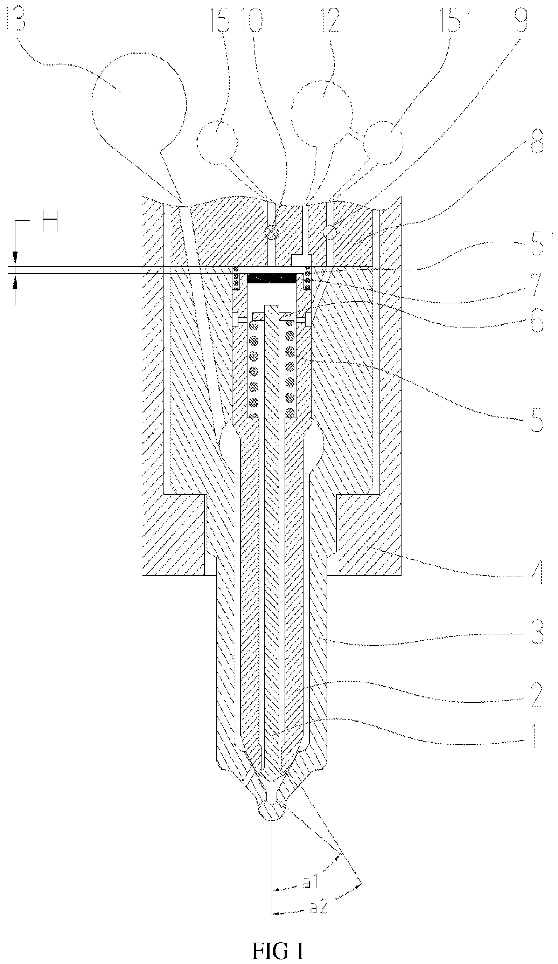

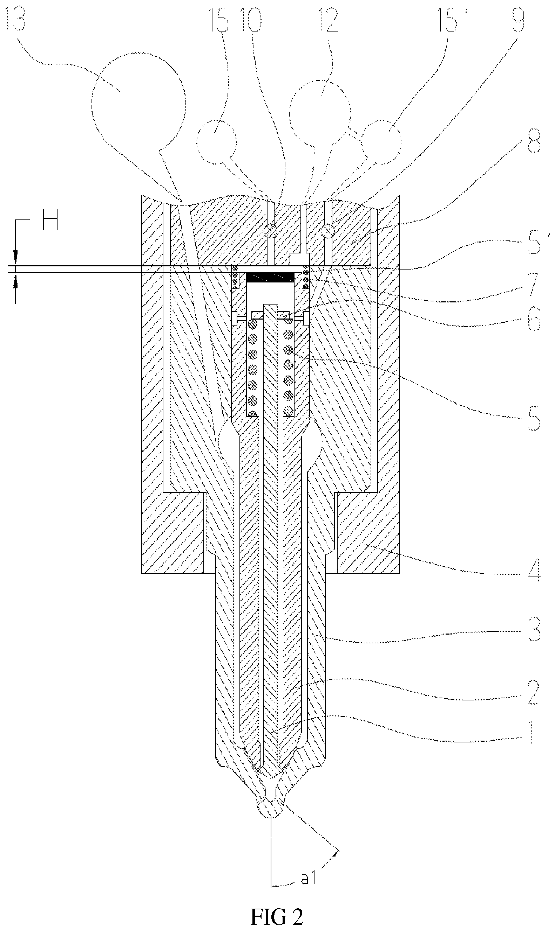

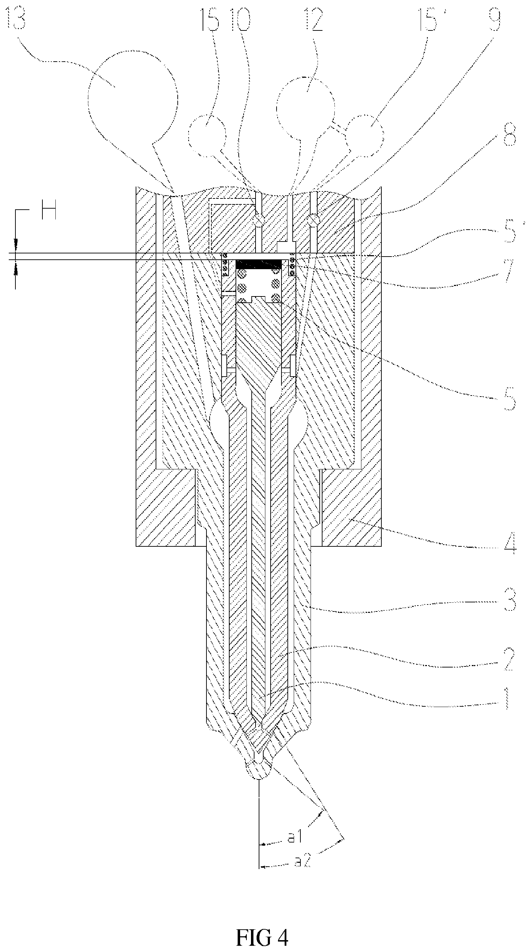

Except specifically specified, in all the figures:
**In** **FIG 1****~3: 1 -** inner outward opening needle valve; **101** - inner needle valve head, **121** - **inner** fuel injection outlets formed by lifting needle valve 1, **102** - head surface of 1, **103** - seal surface of inner needle valve, **104** - needle guide for 1, 122 - fuel passage, 124 - sliding surface, **125** - pressure control chamber, **161-** tightly fitted surface between **1** and **6,**
**In** **FIG 4****~5: 1 -** inner inward opening needle valve; **101**-inner needle valve, **121 -** the sealing surface formed by pressing needle **1** into seating position on needle valve **2, 121'** (not shown) - seal surface of inner needle valve, **125** - pressure or venting chamber;
   **2** - outer inward opening needle valve; **201** - sealing surface of **2**, 202 - sealing surface on 2 for needle valve **1, 203** - needle guide of **2** (not shown), **204** - thrusting surface of **2,** 205 - fuel inlet for pressure chamber, **206** - top surface of 2, **207** - fuel venting outlet, **208** - inner fuel injection outlets, **231 -** contact sealing surface between needle 2 and nozzle body **3** when needle valve **2** is at seating position, **231'** - fuel passage under needle seat of 2 when it is lifted, **232** - fuel passage, **233** - pressure chamber, 122- fuel passage, **123-** sectional sliding matched surface between **1** and **2**;
   **3** - nozzle body; **301 -** fuel injection outlets; **302** - inner conical surface on nozzle body; **303** - high pressure fuel passage leading fuel to pressure chamber **233, 304** - sliding surface, **305** - fuel passage leading fuel from fuel reservoir 15' to pressure control chamber **125, 306** - nozzle large end, **307** - inner bore of **3, 308** - fuel channel, **381, 382** - pressure chambers;
   **4** - injector body cap; **341 -** contact surface between **3** and **4;**
   **5, 5'** - spring which urges needle valves **1** and **2** into seating positions;
   **6** - clip ring to hold needle valve 1;
   **7** - tight seal cap for pressure control chamber for needle valve 2;
   **8** - valve block which holds valves and fuel passages, **801** -fuel passage to valve 9, **802** - pressure passage to venting valve **10, 803** - high pressure passage; 804 - bottom of valve block 8, 805, 806 - fuel passages;
   **9** - flow control valve;
   **10** - venting control valve, which can be a single valve or a control valve having a throttling valve below it connecting to **802;**
   **12** - high pressure fuel reservoir;
   **13** - high pressure fuel reservoir;
   **12** and **13** can be one such as common rail holding one type of fuel, or two common rails for different fuels or for one fuel with different pressures;
   **15-** low pressure fuel sink;
   **a1** - half multiple jet spray angle for fuel injection outlets 301;
   **a2** - half multiple jet spray angle for fuel injection outlets 309;

### DETAILED DESCRIPTION OF THE PREFERRED EMBODIMENTS

A first embodiment was shown in **FIG 1** to **FIG** 3. **FIG 1** **~ 2** show the **State I** when both the outward opening valve 1 and inward opening valve 2 is at seating position, no fuel is injected. While at **State I,** valve **10** is closed, valve **9** is closed.

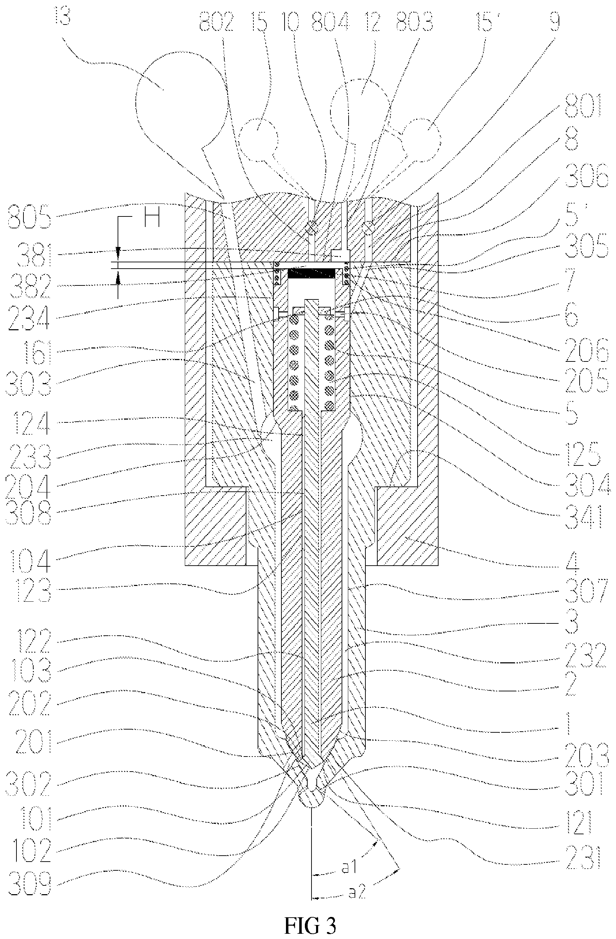

The design in FIG 3 is FIG 1 except it has only one group of fuel injection outlets (301).

A first embodiment was shown in **FIG** 4 to **FIG 5****.** **FIG 4** **~ 5** show the **State I** when both the inner inward opening valve 1 and outer inward opening valve **2** is at seating position, no fuel is injected. While at **State I,** valve **10** is closed, valve **9** is closed.

We have illustrated one embodiment here. For those skilled in the art, it is easy to give alternatives based on the same operation mechanism. The embodiment illustrated here should be considered as an example without limiting the scope of the invention. Other embodiments with the same key characteristics are considered under the scope of this invention. For example, the first fuel and second fuel are the same fuel, thus the injector becomes a single fuel injector. Following features are considered as the key characteristics of the invention.

**STATEMENT A:** Referring to FIG 3, a variable orifice fuel injector comprising:
(i) a nozzle body (3) comprising passages for fuels, an inner cylindrical bore (307) for receiving two longitudinally displaceable coaxial needle valves (1, 2), one is outward opening needle valve (1) and another is inward opening needle valve (2), at least one group of fuel injection outlets (301, 309) in the nozzle body, at least one spring (5, 5') which urges the needle valves (1,2) into biased seating positions to block fuels, and a valve block (8) to hold control valves and having fuel inlets which can be connected to two pressured fuel reservoirs (12, 13), pressure control chambers (382, 125) which can press and release needle valves through connecting to pressurized and de-pressurized fuels, and
(ii) the outward opening needle valve (1), has an opening position which is moving away relative to the nozzle body large end (306) to inject fuel from at least one pressurized fuel reservoir (15') through an annular fuel outlet (121) and fuel injection outlets (301), and a seating position to block fuel flow, and
**(iii)** the inward opening needle valve (2), which is fully contained in the nozzle body (3), has an opening position by moving toward the nozzle body large end (306) to connects at least one pressurized fuel reservoir (13) and fuel injection outlets (309, 301) to inject fuel, wherein the lifting of the inward opening needle valve (2) is independent of the position of the outward opening needle valve (1), and, has a seating position being in contact with the sealing surface of nozzle body to block fuel flow from fuel inlets to fuel injection outlets (309), the sealing surface (201) at seating position is up stream of injection outlets (309), and
(iv) the outward opening needle valve (1) is partially contained in the inward opening needle valve (2) and has a biased siting position on the inward opening needle valve (2), wherein the lifting of outward opening needle valve (1) is independent of the position of the inward opening needle valve (2);
Wherein, the variable orifice fuel injector has means to inject different fuels independently and collectively.

A fuel injector of **STATEMENT A**, wherein it is comprising at least two control valves (9, 10) to block or connect at least one type of fuel from high pressure fuel reservoirs (13, 12, 15') to low pressure fuel sink (15) to produce the lifting and closing forces on the inward opening and outward opening needle valves (1, 2) through generating pressure differences in pressure control chambers (382, 125).

Note that in the exemplary illustration FIG 3, high pressure fuel reservoirs 12 and 15' are actually connected to a single fuel reservoir. Fuel reservoir 13 and 12 can hold two types of fuels differentiated by at least one parameter of molecular structure, pressure and thermodynamic phases. In the case of the fuels in two fuel reservoirs are only differentiated by pressure, it can simply be considered as a single fuel injection at two pressure levels. In this scenario, the fuel injector is simply becomes a single fuel injector with variable orifice for different injection spray angles.

A fuel injector of **STATEMENT A,** wherein the outward opening needle valve (1) is longitudinally displaceable and partially contained within the inward opening needle valve (2) and guided by the needle guide (104) which is longitudinally displaceable in the inner bore of the inward opening valve (2), wherein the outward needle valve (1) is at a biased closing position, or at an opening position through pushing the top surface of the outward opening needle valve with pulse pressured fuel to force the outward needle valve (1) moving outward to inject fuel through one group of fuel injection outlets (301).

A fuel injector of **STATEMENT A,** wherein the inward opening needle valve (2) has a cylindrical space to hold spring (5), the outward opening needle valve (1) and a clip (6), wherein the inward opening needle valve (2) is further comprising fuel passages (122), and a seal cap (7) to define the needle lift, and thrusting surfaces (203, 204) and pressure control chamber (382) to generating lifting force to lift the needle to inject fuel in multiple jets through fuel outlets (301, 309);

A fuel injector of **STATEMENT A,** wherein the half fuel spray angle for one group of fuel injection outlets (a1) and half spray angle for another group of fuel injection outlets (a2) can be same or different, wherein with preferred embodiment such that a1 is greater than a2, wherein the individual fuel outlets can have the same or different flow area, even within the same group.

A fuel injector according to any of above configurations, wherein it has means to inject one type of fuel through fuel injection outlets (301) by lifting the outward opening needle valve (1) and inject another type of fuel through multiple jet fuel outlets (309) by lifting the inward opening needle valve (2) independently, wherein the injections of two types of fuels can be independently or simultaneously.

A fuel injector according to any of above configurations, wherein it has means to inject the same fuel with different pressures through fuel injection outlets (301) controlled by the outward opening needle valve (1) and another group of fuel outlets (309) controlled by the inward opening needle valve (2), preferably with low pressure fuel being supplied to the fuel injection outlets (309) with smaller spray angles and high pressure fuel being supplied to the multiple jet fuel outlets (301) with larger spray angles, wherein the pressurized fuels in fuel reservoirs are of same molecular structure.

Not that in all the above cases, the two groups of fuel injection outlets (301, 309) can be merged into a single group of fuel injection out lets with a spray angle being compromised for different injection timings.

An internal combustion engine using at least one fuel injector of any claim above, which can be a spark-ignition engine or a compression-ignition engine, wherein it has means to inject dual fuels with different spray angles at different injection timings, preferably with a second type of fuel being injected in smaller spray angles for earlier injections which is away from engine top dead center (TDC), and at least one fuel injection with a first type of fuel which has better ignition quality than the second type of fuel being injected around TDC, and one optional late injection which is away from TDC with second type of fuel.

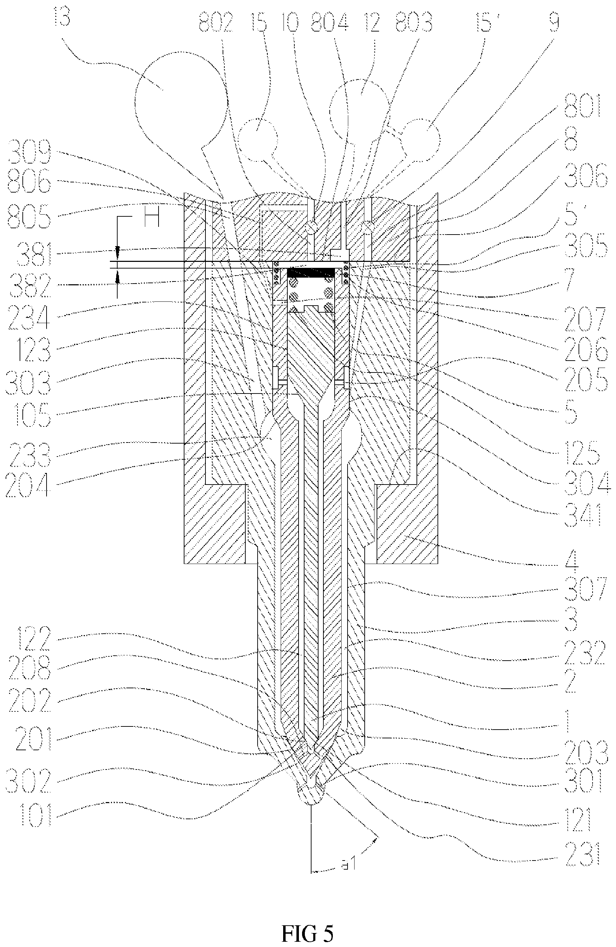

**STATEMENT B:** Referring to FIG 5, a variable orifice fuel injector, comprising of,
**(i)** a nozzle body (3) comprising passages for fuels, an inner cylindrical bore (307) for receiving two longitudinally displaceable coaxial inward opening needle valves (1, 2) with an inner inward opening needle valve being hold within an outer outward opening needle valve, at least one group of fuel injection outlets (301, 309) in the nozzle body, at least one spring (5, 5') which urges the needle valves (1, 2) into biased seating positions to block fuels, and a valve block (8) to hold control valves and having fuel inlets which can be connected to two pressured fuel reservoirs (13, 15'), pressure control chambers (382, 125) which can press and release needle valves through applying pressurized and de-pressurized fuels, and
(ii) the inner inward opening needle valve (1), which has an opening position by moving toward nozzle body large end (306) to inject fuel from at least one pressurized reservoir (15') through one inner fuel injection outlets (208) and another group of outer fuel injection outlets (301), and a biased seating position to block fuel flow, and
**(iii)** the outer inward opening needle valve (2), which is fully contained in the the nozzle body (3), has an opening position by moving toward nozzle body large end to connect at least one pressurized fuel reservoir (13) and fuel injection outlets (309, 301) to inject fuel, has a biased seating position with its sealing surface (201) being in contact with the sealing surface of nozzle body to block fuel flow, the sealing surface (201) at seating position is up stream of injection outlets (309), wherein the lifting of outer opening needle valve (2) is independent of the position of the inner inward opening needle valve (1);
**(iv)** the outer inward opening needle valve (2) has an inner seat (202) for the inner inward opening needle valve (1), the inner needle valve (1) is fully contained in outer needle valve (2), wherein the lifting of inner inward opening needle valve (1) is independent of the position of the outer inward opening needle valve (2);
Wherein, the variable orifice fuel injector has means to inject different fuels independently and collectively.

A fuel injector of **STATEMENT B,** wherein the activation of the inner inward opening needle valve is in a manner similar to passive actuation to reach injection state wherein the pulsed high fuel pressure being supplied to pressure chamber (122) conquers the downward spring force of closing spring (5), wherein the chamber on top of the inner needle valve is at venting pressure;

A fuel injector of **STATEMENT B,** wherein the activation of the inner inward opening needle valve is in a manner similar to a common rail injector wherein the fuel pressure supplied to pressure chamber (122) equals to fuel pressure supplied to the control chamber (125) on top of the inner needle valve during no-injection status, wherein the fuel pressure in the control chamber (125) on top of the inner needle valve is vented to allow the inner needle valve to be lifted up for fuel injection;

## Claims

1. A variable orifice fuel injector comprising:
(i) a nozzle body (3) comprising passages for fuels, an inner cylindrical bore (307) for receiving two longitudinally displaceable coaxial needle valves (1, 2), one is outward opening needle valve (1) and another is inward opening needle valve (2), at least one group of fuel injection outlets (301, 309) in said nozzle body, at least one spring (5, 5') which urges said needle valves (1, 2) into biased seating positions to block fuels, and a valve block (8) to hold control valves and having fuel inlets which can be connected to two pressured fuel reservoirs (12, 13), pressure control chambers (382, 125) which can press and release needle valves through connecting to pressurized and de-pressurized fuels, and
**(ii)** said outward opening needle valve (1), has an opening position which is moving away relative to a nozzle body large end (306) to inject fuel from at least one pressurized fuel reservoir through an annular fuel outlet (121) and fuel injection outlets (301), and a seating position to block fuel flow, and
**(iii)** said inward opening needle valve (2), which is fully contained in the said nozzle body (3), has an opening position by moving toward said nozzle body large end (306) to connects at least one pressurized fuel reservoir (13) and fuel injection outlets (309, 301) to inject fuel, wherein the lifting of said inward opening needle valve (2) is independent of the position of said outward opening needle valve (1), and, has a seating position being in contact with a sealing surface of nozzle body to block fuel flow from fuel inlets to fuel injection outlets (309), a sealing surface (201) at seating position is up stream of injection outlets (309), and
**(iv) characterized in that** the said outward opening needle valve (1) is partially contained in said inward opening needle valve (2) and has a biased siting position on said inward opening needle valve (2), wherein the lifting of outward opening needle valve (1) is independent of the position of said inward opening needle valve (2), wherein it is comprising at least two control valves (9, 10) to block or connect at least one type of fuel from high pressure fuel reservoirs (13, 12, 15') to low pressure fuel sink (15) to produce the lifting and closing forces on said inward opening and outward opening needle valves (1, 2) through generating pressure differences in pressure control chambers (382, 125).

2. A fuel injector of claim 1, wherein said outward opening needle valve (1) is longitudinally displaceable and partially contained within said inward opening needle valve (2) and guided by a needle guide (104) which is longitudinally displaceable in the inner bore of said inward opening valve (2), wherein said needle valve (1) is at a biased closing position, or at an opening position through pushing the top surface of said outward opening needle valve with pulse pressured fuel to force said needle valve (1) moving outward to inject fuel through one group of fuel injection outlets (301).

3. A fuel injector of claim 1, wherein said inward opening needle valve (2) has a cylindrical space to hold spring (5), said outward opening needle valve (1) and a clip (6), wherein said inward opening needle valve (2) is further comprising fuel passages (122), and a seal cap (7) to define the needle lift, and thrusting surfaces (203, 204) and pressure control chamber (382) to generating lifting force to lift the needle to inject fuel in multiple jets through fuel outlets (301, 309).

4. A fuel injector of claim 1, wherein the half fuel spray angle for one group of fuel injection outlets (a1) and half spray angle for another group of fuel injection outlets (a2) can be same or different, wherein with preferred embodiment such that a1 is greater than a2.

5. A fuel injector of claim 4, wherein the individual fuel outlets can have the same or different flow area, even within the same group.

6. A fuel injector according to any claim of 1 to 4, wherein it has means to inject the same fuel with different pressures through fuel injection outlets (301) controlled by said outward opening needle valve (1) and another group of fuel outlets (309) controlled by said inward opening needle valve (2), preferably with low pressure fuel being supplied to said fuel injection outlets (309) with smaller spray angles and high pressure fuel being supplied to said multiple jet fuel outlets (301) with larger spray angles, wherein the pressurized fuels in fuel reservoirs are of same molecular structure.

7. An internal combustion engine using at least one fuel injector of claim 1-6, which can be a spark-ignition engine or a compression-ignition engine, wherein it has means to inject dual fuels with different spray angles at different injection timings, preferably with a second type of fuel being injected in smaller spray angles for earlier injections which is away from engine top dead center (TDC), and at least one main fuel injection with a first type of fuel which has better ignition quality than the second type of fuel being injected around TDC, and one optional late injection which is away from TDC with second type of fuel.

8. A variable orifice fuel injector, comprising of,
**(i)** a nozzle body (3) comprising passages for fuels, an inner cylindrical bore (307) for receiving two longitudinally displaceable coaxial inward opening needle valves (1, 2) with an inner inward opening needle valve being hold within an outer inward opening needle valve, at least one group of fuel injection outlets (301, 309) in said nozzle body, at least one spring (5, 5') which urges said needle valves (1,2) into biased seating positions to block fuels, and a valve block (8) to hold control valves and having fuel inlets which can be connected to two pressured fuel reservoirs (13, 15'), pressure control chambers (382, 125) which can press and release needle valves through applying pressurized and de-pressurized fuels, and
**(ii)** said inner inward opening needle valve (1), which has an opening position by moving toward a nozzle body large end (306) to inject fuel from at least one pressurized reservoir (15') through one inner fuel injection outlets (208) and another group of outer fuel injection outlets (301), and a biased seating position to block fuel flow, and
**(iii)** said outer inward opening needle valve (2), which is fully contained in the said nozzle body (3), has an opening position by moving toward nozzle body large end to connect at least one pressurized fuel reservoir (13) and fuel injection outlets (309, 301) to inject fuel, has a biased seating position with its sealing surface (201) being in contact with a sealing surface of nozzle body to block fuel flow, said sealing surface (201) at seating position is up stream of injection outlets (301), **characterized in that** the lifting of outer opening needle valve (2) is independent of the position of said inner inward opening needle valve (1);
(iv) said outer inward opening needle valve (2) has an inner seat (202) for said inner inward opening needle valve (1), said inner needle valve (1) is fully contained in said outer needle valve (2), wherein the lifting of inner inward opening needle valve (1) is independent of the position of said outer inward opening needle valve (2),
wherein the activation of the said inner inward opening needle valve is in a manner similar to passive actuation to reach injection state wherein the pulsed high fuel pressure being supplied to pressure chamber (122) conquers the downward spring force of closing spring (5), wherein the chamber on top of the said needle valve is at venting pressure.

9. A fuel injector of claim 8, wherein the activation of the said small inward opening needle valve is in a manner similar to a common rail injector wherein the fuel pressure supplied to pressure chamber (122) equals to fuel pressure supplied to the control chamber (125) on top of the said inner needle valve during no-injection status, wherein the fuel pressure in the control chamber (125) on top of the said inner needle valve is vented to allow the said inner needle valve to be lifted up for fuel injection.

## Patentansprüche

1. Kraftstoffinjektor mit variabler Öffnung, aufweisend:
(i) einen Düsenkörper (3), der aufweist: Kanäle für Kraftstoff, eine zylindrische Innenbohrung (307) zur Aufnahme von zwei längs verlagerbaren koaxialen Nadelventilen (1, 2), eines ein sich nach außen öffnendes Nadelventil (1) und ein anderes ein sich nach innen öffnendes Nadelventil (2), wenigstens eine Gruppe von Kraftstoffeinspritzauslässen (301, 309) in dem genannten Düsenkörper, wenigstens eine Feder (5, 5'), die die genannten Nadelventile (1, 2) in vorgespannte Sitzstellungen zum Blockieren von Kraftstoffen drängt, und einen Ventilblock (8) zur Aufnahme von Steuerventilen und mit Kraftstoffeinlässen, die mit zwei druckbeaufschlagten Kraftstoffspeichern (12, 13) verbunden werden können, Drucksteuerkammern (382, 125), die durch Verbinden mit unter Druck stehenden und drucklosen Kraftstoffen (auf) Nadelventile drücken und freigeben können, und
(ii) das genannte sich nach außen öffnende Nadelventil (1) hat durch Wegbewegen relativ zu einem großen Düsenkörperende (306) eine Öffnungsstellung zum Einspritzen von Kraftstoff aus wenigstens einem druckbeaufschlagten Kraftstoffspeicher durch einen ringförmigen Kraftstoffauslass (121) und Kraftstoffeinspritzauslässe (301) und eine Sitzstellung zum Blockieren des Kraftstoffflusses, und
(iii) das genannte sich nach innen öffnende Nadelventil (2), das vollständig in dem genannten Düsenkörper (3) enthalten ist, hat durch Hinbewegen zu dem genannten großen Düsenkörperende (306) eine Öffnungsstellung zum Verbinden von wenigstens einem druckbeaufschlagten Kraftstoffspeicher (13) und Kraftstoffeinspritzauslässen (309, 301) zum Einspritzen von Kraftstoff, wobei das Anheben des genannten sich nach innen öffnenden Nadelventils (2) von der Stellung des genannten sich nach außen öffnenden Nadelventils (1) unabhängig ist, und hat eine Sitzstellung, in der es mit einer Dichtfläche des Düsenkörpers in Kontakt ist, um Kraftstofffluss von Kraftstoffeinlässen zu Kraftstoffeinspritzauslässen (309) zu blockieren, wobei eine Dichtfläche (201) in der Sitzstellung Einspritzauslässen (309) vorgelagert ist, und
(iv) **dadurch gekennzeichnet, dass** das genannte sich nach außen öffnende Nadelventil (1) teilweise in dem genannten sich nach innen öffnenden Nadelventil (2) enthalten ist und eine vorgespannte Sitzstellung auf dem genannten sich nach innen öffnenden Nadelventil (2) hat, wobei das Anheben des sich nach außen öffnenden Nadelventils (1) von der Stellung des genannten sich nach innen öffnenden Nadelventils (2) unabhängig ist,
wobei er wenigstens zwei Steuerventile (9, 10) zum Blockieren oder Verbinden wenigstens eines Kraftstofftyps aus Hochdruck-Kraftstoffspeichern (13, 12, 15') gegenüber bzw. mit einer Niederdruck-Kraftstoffsenke (15) zum Bewirken der Hebe-und Schließkräfte auf das genannte sich nach innen öffnende und sich nach außen öffnende Nadelventil (1, 2) durch Erzeugen von Druckdifferenzen in Drucksteuerkammern (382, 125) aufweist.

2. Kraftstoffinjektor nach Anspruch 1, wobei das genannte sich nach außen öffnende Nadelventil (1) längs verlagerbar und teilweise in dem genannten sich nach innen öffnenden Nadelventil (2) enthalten ist und von einer Nadelführung (104) geführt wird, die in der Innenbohrung des genannten sich nach innen öffnenden Ventils (2) längs verlagerbar ist, wobei das genannte Nadelventil (1) sich in einer vorgespannten Schließstellung oder in einer Öffnungsstellung befindet, indem mit gepulstem unter Druck stehendem Kraftstoff auf die Oberseite des genannten sich nach außen öffnenden Nadelventils gedrückt wird, um das genannte Nadelventil (1) zur Bewegung nach außen zu zwingen, um Kraftstoff durch eine Gruppe von Kraftstoffeinspritzauslässen (301) einzuspritzen.

3. Kraftstoffinjektor nach Anspruch 1, wobei das genannte sich nach innen öffnende Nadelventil (2) einen zylindrischen Raum zur Aufnahme der Feder (5), des genannten sich nach außen öffnenden Nadelventils (1) und eines Halterings (6) hat, wobei das genannte sich nach innen öffnende Nadelventil (2) ferner Kraftstoffkanäle (122) und eine Dichtungskappe (7) zum Definieren des Nadelhubs und Schubflächen (203, 204) und eine Drucksteuerkammer (382) zum Erzeugen von Hebekraft zum Anheben der Nadel zum Einspritzen von Kraftstoff in mehreren Strahlen durch Kraftstoffauslässe (301, 309) aufweist.

4. Kraftstoffinjektor nach Anspruch 1, wobei der halbe Kraftstoffeinspritzwinkel für eine Gruppe von Kraftstoffeinspritzauslässen (a1) und der halbe Einspritzwinkel für eine weitere Gruppe von Kraftstoffeinspritzauslässen (a2) gleich oder verschieden sein können, wobei die bevorzugte Ausgestaltung dergestalt ist, dass a1 größer als a2 ist.

5. Kraftstoffinjektor nach Anspruch 4, wobei die einzelnen Kraftstoffauslässe die gleiche oder eine verschiedene Durchflussfläche haben, selbst innerhalb der gleichen Gruppe.

6. Kraftstoffinjektor nach einem der Ansprüche 1 bis 4, wobei er ein Mittel hat zum Einspritzen desselben Kraftstoffs mit verschiedenen Drücken durch Kraftstoffeinspritzauslässe (301), die von dem genannten sich nach außen öffnenden Nadelventil (1) gesteuert werden, und eine weitere Gruppe von Kraftstoffauslässen (309), die von dem genannten sich nach innen öffnenden Nadelventil (2) gesteuert werden, vorzugsweise wobei Niederdruck-Kraftstoff den genannten Kraftstoffeinspritzauslässen (309) mit kleineren Einspritzwinkeln zugeführt wird und Hochdruck-Kraftstoff den genannten Mehrstrahl-Kraftstoffauslässen (301) mit größeren Einspritzwinkeln zugeführt wird, wobei die unter Druck stehenden Kraftstoffe in Kraftstoffspeichern die gleiche Molekularstruktur haben.

7. Verbrennungskraftmaschine, wenigstens einen Kraftstoffinjektor nach Anspruch 1 bis 6 verwendend, die ein Motor mit Fremdzündung oder ein Motor mit Kompressionszündung sein kann, wobei sie ein Mittel hat zum Einspritzen zweier Kraftstoffe mit verschiedenen Einspritzwinkeln zu verschiedenen Einspritzzeitpunkten, vorzugsweise mit Einspritzen eines zweiten Kraftstofftyps, der in kleineren Einspritzwinkeln eingespritzt wird, für frühere Einspritzungen, die von dem oberen Totpunkt (OT) des Motors entfernt sind, und mindestens einer Hauptkraftstoffeinspritzung mit einem ersten Kraftstofftyp mit einer besseren Zündqualität als der zweite Kraftstofftyp, die um den OT eingespritzt wird, und einer wahlweisen späten Einspritzung mit dem zweiten Kraftstofftyp, die von dem OT entfernt ist.

8. Kraftstoffinjektor mit variabler Öffnung, aufweisend:
(i) einen Düsenkörper (3), der aufweist: Kanäle für Kraftstoff, eine zylindrische Innenbohrung (307) zur Aufnahme von zwei längs verlagerbaren koaxialen sich nach innen öffnenden Nadelventilen (1, 2), wobei ein sich nach innen öffnendes Nadelventil in einem äußeren sich nach innen öffnenden Nadelventil aufgenommen ist, wenigstens eine Gruppe von Kraftstoffeinspritzauslässen (301, 309) in dem genannten Düsenkörper, wenigstens eine Feder (5, 5'), die die genannten Nadelventile (1, 2) in vorgespannte Sitzstellungen zum Blockieren von Kraftstoffen drängt, und einen Ventilblock (8) zur Aufnahme von Steuerventilen und mit Kraftstoffeinlässen, die mit zwei druckbeaufschlagten Kraftstoffspeichern (12, 15') verbunden werden können, Drucksteuerkammern (382, 125), die durch Verbinden mit unter Druck stehenden und drucklosen Kraftstoffen (auf) Nadelventile drücken und freigeben können, und
(ii) das genannte sich nach innen öffnende Nadelventil (1), das durch Hinbewegen zu einem großen Düsenkörperende (306) eine Öffnungsstellung zum Einspritzen von Kraftstoff aus wenigstens einem druckbeaufschlagten Kraftstoffspeicher (15') durch einen inneren Kraftstoffauslass (208) und eine weitere Gruppe von äußeren Kraftstoffeinspritzauslässen (301) und eine vorgespannte Sitzstellung zum Blockieren des Kraftstoffflusses hat, und
(iii) das genannte sich nach innen öffnende Nadelventil (2), das vollständig in dem genannten Düsenkörper (3) enthalten ist, hat durch Hinbewegen zu dem genannten großen Düsenkörperende eine Öffnungsstellung zum Verbinden von wenigstens einem druckbeaufschlagten Kraftstoffspeicher (13) und Kraftstoffeinspritzauslässen (309, 301) zum Einspritzen von Kraftstoff, hat ein vorgespannte Sitzstellung, wobei ihre Dichtfläche (201) mit einer Dichtfläche des Düsenkörpers in Kontakt ist, um Kraftstofffluss zu blockieren, wobei die genannte Dichtfläche (201) in Sitzstellung Einspritzauslässen (3019 vorgelagert ist, **dadurch gekennzeichnet, dass** das Anheben des äußeren sich öffnenden Nadelventils (2) von der Stellung des genannten inneren sich nach innen öffnenden Nadelventils (1) unabhängig ist;
(iv) das genannte äußere sich nach innen öffnende Nadelventil (2) hat einen inneren Sitz (202) für das genannte innere sich nach innen öffnende Nadelventil (1), das genannte innere Nadelventil (1) ist vollständig in dem genannten äußeren Nadelventil (2) enthalten, wobei das Anheben des inneren sich nach innen öffnenden Nadelventils (1) von der Stellung des genannten äußeren sich nach innen öffnenden Nadelventils (2) unabhängig ist,
wobei die Aktivierung des genannten inneren sich nach innen öffnenden Nadelventils auf eine Weise erfolgt, die ähnlich passiver Betätigung zum Erreichen des Einspritzzustands ist, wobei der der Druckkammer (122) zugeführte gepulste hohe Kraftstoffdruck die nach unten gerichtete Federkraft der Schließfeder (5) überwindet, wobei die Kammer oben auf dem genannten Nadelventil auf Ablassdruck ist.

9. Kraftstoffinjektor nach Anspruch 8, wobei die Aktivierung des genannten kleinen sich nach innen öffnenden Nadelventils auf eine Weise erfolgt, die ähnlich einem Common-Rail-Injektor ist, wobei der der Druckkammer (122) zugeführte Kraftstoffdruck gleich dem Kraftstoffdruck ist, der der Steuerkammer (125) oben auf dem genannten inneren Nadelventil während des Nichteinspritzungsstatus zugeführt wird, wobei der Kraftstoffdruck in der Steuerkammer (125) oben auf dem genannten inneren Nadelventil abgelassen wird, damit das genannte innere Nadelventil zur Kraftstoffeinspritzung angehoben werden kann.

## Revendications

1. Injecteur de carburant à orifice variable comprenant :
i) un corps de buse (3) comprenant des passages pour carburants, un alésage cylindrique interne (307) destiné à recevoir deux pointeaux coaxiaux déplaçables longitudinalement (1, 2), l'un étant un pointeau à ouverture vers l'extérieur (1) et l'autre un pointeau à ouverture vers l'intérieur (2), au moins un groupe de sorties d'injection de carburant (301, 309) dans ledit corps de buse, au moins un ressort (5, 5') qui pousse lesdits pointeaux (1, 2) dans des positions assises sollicitées pour bloquer des carburants, et un boîtier à soupapes (8) pour maintenir des soupapes de commande et présentant des entrées de carburant qui peuvent être raccordées à deux réservoirs de carburant pressurisés (12, 13), des chambres de commande de pression (382, 125) qui peuvent presser et relâcher des pointeaux par connexion à des carburants pressurisés et dépressurisés, et
(ii) ledit pointeau à ouverture vers l'extérieur (1), a une position d'ouverture qui s'éloigne par rapport à une grande extrémité de corps de buse (306) pour injecter un carburant à partir d'au moins un réservoir de carburant pressurisé à travers une sortie de carburant annulaire (121) et des sorties d'injection de carburant (301), et une position assise pour bloquer un flux de carburant, et
(iii) ledit pointeau à ouverture vers l'intérieur (2), lequel est entièrement contenu dans ledit corps de buse (3), a une position d'ouverture en se déplaçant vers ladite grande extrémité de corps de buse (306) pour raccorder au moins un réservoir de carburant pressurisé (13) et des sorties d'injection de carburant (309, 301) pour injecter un carburant, dans lequel le soulèvement dudit pointeau à ouverture vers l'intérieur (2) est indépendant de la position dudit pointeau d'ouverture vers l'extérieur (1), et a une position assise en contact avec une surface d'étanchéité du corps de buse pour bloquer un flux de carburant provenant d'entrées de carburant vers des sorties d'injection de carburant (309), une surface d'étanchéité (201) en position assise est en amont des sorties d'injection (309), et
(iv) **caractérisé en ce que** ledit pointeau à ouverture vers l'extérieur (1) est partiellement contenu dans ledit pointeau à ouverture vers l'intérieur (2) et a une position assise sollicitée sur ledit pointeau à ouverture vers l'intérieur (2), dans lequel le soulèvement du pointeau à ouverture vers l'extérieur (1) est indépendant de la position dudit pointeau à ouverture vers l'intérieur (2), dans lequel au moins deux vannes de régulation (9, 10) sont comprises pour bloquer ou raccorder au moins un type de carburant provenant de réservoirs de carburant à haute pression (13, 12, 15') vers un puits de carburant basse pression (15) pour produire les forces de soulèvement et de fermeture sur lesdits pointeaux à ouverture vers l'intérieur et vers l'extérieur (1, 2) par génération de différences de pression dans des chambres de commande de pression (382, 125).

2. Injecteur de carburant selon la revendication 1, dans lequel ledit pointeau à ouverture vers l'extérieur (1) est déplaçable longitudinalement et est partiellement contenu dans ledit pointeau à ouverture vers l'intérieur (2) et guidé par un guide de pointeau (104) qui est longitudinalement déplaçable dans l'alésage intérieur dudit pointeau à ouverture vers l'intérieur (2), dans lequel ledit pointeau (1) est à une position de fermeture sollicitée, ou à une position d'ouverture par poussée de la surface supérieure dudit pointeau à ouverture vers l'extérieur avec un carburant pressurisé pulsé pour forcer ledit pointeau (1) à se déplacer vers l'extérieur pour injecter un carburant à travers un groupe de sorties d'injection de carburant (301).

3. Injecteur de carburant selon la revendication 1, dans lequel ledit pointeau à ouverture vers l'intérieur (2) présente un espace cylindrique destiné à renfermer un ressort (5), ledit pointeau à ouverture vers l'extérieur (1) et un clip (6), dans lequel ledit pointeau à ouverture vers l'intérieur (2) comprend en outre des passages de carburant (122) et un bouchon d'étanchéité (7) pour définir le soulèvement de pointeau, ainsi que des surfaces de poussée (203, 204) et une chambre de commande de pression (382) pour générer une force de soulèvement afin de soulever le pointeau pour injecter un carburant en jets multiples à travers des sorties de carburant (301, 309).

4. Injecteur de carburant selon la revendication 1, dans lequel le demi-angle de pulvérisation de carburant pour un groupe de sorties d'injection de carburant (a1) et le demi-angle de pulvérisation pour un autre groupe de sorties d'injection de carburant (a2) peuvent être identiques ou différents, dans un mode de réalisation préféré a1 étant supérieur à a2.

5. Injecteur de carburant selon la revendication 4, dans lequel les sorties de carburant individuelles peuvent avoir la même section d'écoulement ou une section d'écoulement différente, même au sein du même groupe.

6. Injecteur de carburant selon l'une quelconque des revendications 1 à 4, lequel comporte des moyens pour injecter le même carburant avec des pressions différentes à travers des sorties d'injection de carburant (301) commandées par ledit pointeau à ouverture vers l'extérieur (1) et un autre groupe de sorties de carburant (309) commandées par ledit pointeau à ouverture vers l'intérieur (2), de préférence un carburant à basse pression étant fourni auxdites sorties d'injection de carburant (309) avec des angles de pulvérisation plus petits et un carburant à haute pression étant fourni auxdites sorties de carburant en jets multiples (301) avec des angles de pulvérisation plus grands, les carburants pressurisé dans les réservoirs de carburant ayant la même structure moléculaire.

7. Moteur à combustion interne utilisant au moins un injecteur de carburant selon les revendications 1 à 6, lequel peut être un moteur à allumage commandé ou un moteur à allumage par compression, lequel comporte des moyens pour injecter des carburants doubles ayant différents angles de pulvérisation à différents moments d'injection, de préférence un deuxième type de carburant étant injecté dans des angles de pulvérisation plus petits pour des injections antérieures éloigné du point mort haut (TDC) du moteur, et au moins une injection de carburant principale avec un premier type de carburant ayant une meilleure qualité d'allumage que celle du deuxième type de carburant injecté autour du TDC, et une injection tardive optionnelle qui est éloignée du TDC avec le deuxième type de carburant.

8. Injecteur de carburant à orifice variable, comprenant :
(i) un corps de buse (3) comprenant des passages pour carburants, un alésage cylindrique interne (307) destiné à recevoir deux pointeaux coaxiaux à ouverture vers l'intérieur déplaçables longitudinalement (1, 2) avec un pointeau à ouverture vers l'intérieur interne maintenu à l'intérieur d'un pointeau à ouverture vers l'intérieur externe, au moins un groupe de sorties d'injection de carburant (301, 309) dans ledit corps de buse, au moins un ressort (5, 5') qui pousse lesdits pointeaux (1, 2) dans des positions assises sollicitées pour bloquer des carburants, et un boîtier à soupapes (8) pour maintenir des soupapes de commande et présentant des entrées de carburant qui peuvent être raccordées à deux réservoirs de carburant pressurisés (13, 15'), des chambres de commande de pression (382, 125) qui peuvent presser et relâcher les pointeaux par application de carburants pressurisés et dépressurisés, et
(ii) ledit pointeau à ouverture vers l'intérieur interne (1), lequel a une position d'ouverture en se déplaçant vers une grande extrémité de corps de buse (306) pour injecter un carburant à partir d'au moins un réservoir pressurisé (15') à travers une sortie d'injection de carburant interne (208) et un autre groupe de sorties d'injection de carburant externes (301), et une position assise sollicitée pour bloquer un flux de carburant, et
(iii) ledit pointeau à ouverture vers l'intérieur externe (2), lequel est entièrement contenu dans ledit corps de buse (3), a une position d'ouverture en se déplaçant vers la grande extrémité de corps de buse pour raccorder au moins un réservoir de carburant pressurisé (13) et des sorties d'injection de carburant (309, 301) pour injecter un carburant, a une position assise sollicitée avec sa surface d'étanchéité (201) en contact avec une surface d'étanchéité du corps de buse pour bloquer un flux de carburant, ladite surface d'étanchéité (201) en position assise étant en amont de sorties d'injection (301), **caractérisé en ce que** le soulèvement du pointeau à ouverture externe (2) est indépendant de la position dudit pointeau à ouverture vers l'intérieur interne (1) ;
(iv) ledit pointeau à ouverture vers l'intérieur externe (2) comporte un siège intérieur (202) pour ledit pointeau à ouverture vers l'intérieur interne (1), ledit pointeau interne (1) est entièrement contenu dans ledit pointeau externe (2), dans lequel le soulèvement du pointeau à ouverture vers l'intérieur interne (1) est indépendant de la position dudit pointeau à ouverture vers l'intérieur externe (2),
dans lequel l'actionnement dudit pointeau à ouverture vers l'intérieur interne est similaire à un actionnement passif pour atteindre un état d'injection dans lequel la haute pression de carburant pulsé fournie à une chambre de pression (122) l'emporte sur la force de ressort descendante d'un ressort de fermeture (5), dans lequel la chambre au-dessus dudit pointeau est à une pression d'évent.

9. Injecteur de carburant selon la revendication 8, dans lequel l'actionnement dudit petit pointeau à ouverture vers l'intérieur est similaire à celui d'un injecteur à rampe commune dans lequel la pression de carburant fournie à une chambre de pression (122) est égale à une pression de carburant fournie à la chambre de commande (125) au-dessus dudit pointeau interne pendant un état de non-injection, dans lequel la pression de carburant dans la chambre de commande (125) au-dessus dudit pointeau interne est éventée pour permettre le soulèvement dudit pointeau interne pour une injection de carburant.
